# EUROPEAN PATENT APPLICATION

(11) **EP 1 306 991 A1**
(43) Date of publication of application: **02.05.2003**
(21) Application number: 01410132.3
(22) Date of filing: 23.10.2001
(51) Int. Cl.: H04B 11/00

(54) **Conveying information to a communication device using sonic representations**

(71) Applicant: Hewlett-Packard Company, Palo Alto, CA 94304 (US)
(72) Inventor: Brebner, Gavin, 38140 St Martin D'Uriage (FR)
(74) Representative: Lloyd, Richard Graham

(57) **Abstract**

A method of conveying network location information to a communication device, comprising procuring the network location information as a sonic representation thereof, and effecting wireless transmission of the sonic representation towards the communication device, the sonic representation, during transmission, being imperceptible or unintelligible to a user of the device.

## Description

### Field of and Background to the Invention

This invention relates in general terms to a method of conveying network location information to a communication device, a method of conveying the location of an Internet site to a network-enabled communication device, a method of locating a communication device or a user thereof, a commercial or retail promotional system and to a method of conveying, in a commercial or retail environment, promotional or product-background data.

More particularly, although by no means exclusively, the invention relates to a method and system by which localisation (i.e. determining the location) of communication devices and their users may be achieved, whereby the whereabouts of such devices and users may be monitored, and whereby targeted, user-specific information and promotional data may be conveyed thereto.

Currently, a number of systems and proposals exist by which localisation of this type can be achieved. Hewlett Packard's "CoolTown" beacon arrangement enables a number of objects and positions within a given space each to be allocated a unique URL, with the URL's being passed to a user's portable communication device (such as a PDA [Personal Digital Assistant]) to allow the user to access the website concerned and thus to avail him/herself of the product/location-specific information provided thereby. Although the "CoolTown" system constitutes a visionary and technically advanced approach to localisation, the system is very hardware-dependent and somewhat restrictive in that the "line-of-sight" requirement of the infra-red data transport beams can be inconvenient. Moreover, the "CoolTown" beacons require dedicated power supplies such as batteries which increase the associated running costs and can give rise to reliability problems.

Localisation systems based upon the operating principles of GSM (Global System for Mobile Telecommunications) arrangements are also known, whereby personal communication devices such as PDA's can be tracked by monitoring the radio cells within which they are operating at a given time. However, the cells are generally quite large and it is therefore difficult to identify the location of a given communication device to a satisfactory degree of accuracy.

Approaches based on triangulation - the principle underlying the GPS (Global Positioning System) arrangement - have also been proposed, whereby the distance of a communication device or associated user from three known reference points allows the location of the device/user to be determined. However, this requires the use of sophisticated processing equipment and dedicated transmitters and is therefore unlikely to constitute an economically viable solution in many cases.

Fourthly, inertial tracking has been suggested as a way in which the location and movement of a communication device/user can be monitored, although the apparatus required to perform the highly sophisticated calculations needed means that the costs of this approach are unduly high.

It is an object of the present invention to provide methods, a system and a device that overcome or at least reduce these and other shortcomings.

### Summary of the Invention

In accordance with a first aspect of the present invention, there is provided a method of conveying network location information to a communication device, comprising procuring the network location information as a sonic representation thereof, and effecting wireless transmission of the sonic representation towards the communication device, the sonic representation, during transmission, being imperceptible or unintelligible to a user of the device.

The communication device may convert the sonic representation into a machine-readable format. The machine-readable format may be a computer code, whereby a computer may access information provided at the network location. Conveniently, the machine-readable format comprises an alphanumeric string.

The sonic representation may be transmitted at a volume imperceptible to the user. Alternatively, or in addition, the sonic representation may be transmitted at a frequency imperceptible to the user.

Alternatively, the sonic representation, whilst being perceptible to the user, may be encoded and thus unintelligible thereto.

The communication device may decode the sonic representation using a transduction step.

The sonic representation may include a carrier and the communication device may decode the sonic representation using a demodulation step.

The network location information may be encoded using a frequency, amplitude or phase-shift modulation step.

The communication device may decode the sonic representation by using the sonic representation as a look-up variable and accessing network information location in a data field corresponding to the look-up variable,

The network information may be provided in a look-up table and the sonic representation may be used to identify an appropriate entry in the look-up table.

The sonic representation may include at least two distinct sonic elements, the elements corresponding to different variables used to identify an appropriate entry in the look-up table.

At least one sonic element may be provided with error corrective coding. The error corrective coding may include or consist of Hamming coding. Hamming coding is well-known in itself, and is described in "Error detecting and error correcting codes" (Bell System Technical Journal, Vol. 26, No. 2, April 1950).

At least two look-up tables may be provided and the sonic representation may be used to identify which look-up table is to be employed to identify the appropriate network location information.

The communication device may be operative periodically to access an update database, whereby the or each look-up table may be updated.

The update database may be provided on a network and an agent may be employed by the communication device to access the networked database on an automated basis.

The update may be effected by polling an Internet site.

Preferably, the network location information is a URL.

The communication device may be a PDA (Personal Digital Assistant).

The network location may be accessed by the communication device once the sonic representation has been converted.

The network location information may be modified in accordance with a profile of the user, whereby user-specific data may be obtained from the network location.

The network location may be accessed using an anonymising proxy whereby the identity and/or location of the communication device and/or user is not revealed to the network location.

The sonic representation may be blended or transmitted with an audible stream. The audible stream may be music, such as may be provided in a commercial or retail environment.

The network location may store information relating to products or services offered in the commercial or retail environment.

In accordance with a second aspect of the present invention, there is provided a method of conveying the location of an Internet site to a network-enabled communication device comprising wirelessly transmitting a sonic representation of the location towards the communication device, the sonic representation, during transmission, being imperceptible or unintelligible to a user of the device, converting the sonic representation into a computer-comprehensible format and accessing the Internet site, whereby the user may view, or otherwise make use of, information or facilities provided by the site.

The invention, in its second aspect, may comprise one or more of the features set out in relation to the first aspect.

In accordance with a third aspect of the present invention, there is provided, in a commercial or retail environment, a method of conveying the location of an Internet site to a network-enabled communication device comprising wirelessly transmitting a sonic representation of the location towards the communication device, the sonic representation, during transmission, being imperceptible or unintelligible to a user of the device, converting the sonic representation into a computer-comprehensible format and accessing the Internet site, whereby the user may view, or otherwise make use of, information or facilities provided by the site, the information or facilities being associated with products or services offered in the commercial or retail environment.

The invention, in its third aspect, may comprise one or more of the features set out in relation to the first two aspects.

In accordance with a fourth aspect of the present invention, there is provided a method of locating a communication device or a user thereof, comprising wirelessly transmitting a sonic representation of a network location towards the communication device from a sonic output device, and causing the device to access the location, the identity of the device or user being sent with the access request, whereby the device or user may be placed within the effective sonic range of the output device.

The invention, in its fourth aspect, may comprise one or more of the features set out in relation to the first three aspects.

In accordance with a fifth aspect of the present invention, there is provided a commercial or retail promotional system of the kind in which an actual or prospective customer is provided with promotional or product-background data, comprising a plurality of sonic output devices, which together provide part of an intercom, piped music or other such broadcast arrangement, the sonic output devices being arranged, configured or connected so as to transmit a sonic representation of a computer network location towards such a customer, whereby the customer's communication device such as a PDA may convert the sonic representation into a computer-comprehensible format and access the network location, whereby the promotional or product-background data may be conveyed to the customer.

The invention, in its fifth aspect, may comprise one or more of the features set out in relation to the first four aspects.

In accordance with a sixth aspect of the present invention, there is provided a method of conveying, in a commercial or retail environment, promotional or product-background data to an actual or prospective customer, comprising procuring a sonic representation of the data, transmitting the sonic representation towards the customer, the sonic representation being imperceptible or unintelligible to the customer, but perceptible or intelligible to a wireless communication device of the customer, whereby the data may be conveyed to the customer, from the communication device.

The communication device may be a PDA having a sound-receptive element.

The invention, in its sixth aspect, may comprise one or more of the features set out in relation to the first five aspects.

In accordance with a seventh aspect of the present invention, there is provided a communication device having a receiving element operative to receive, in a form imperceptible or unintelligible to a user thereof, a sonic representation of network location information, and a conversion element operative to convert the sonic representation to a machine-readable format.

The conversion element may be associated with a demodulation element whereby network location information may be obtained from a modulated audible stream.

### Brief Description of the Drawings

Embodiment of the invention, in its various aspects, will now be described in greater detail, but strictly by way of example only, by reference to the accompanying drawings, of which:
Figure 1 is a schematic illustration of how the invention can be put into practice; and
Figure 2 is a schematic illustration of various processes used by an embodiment of the invention.

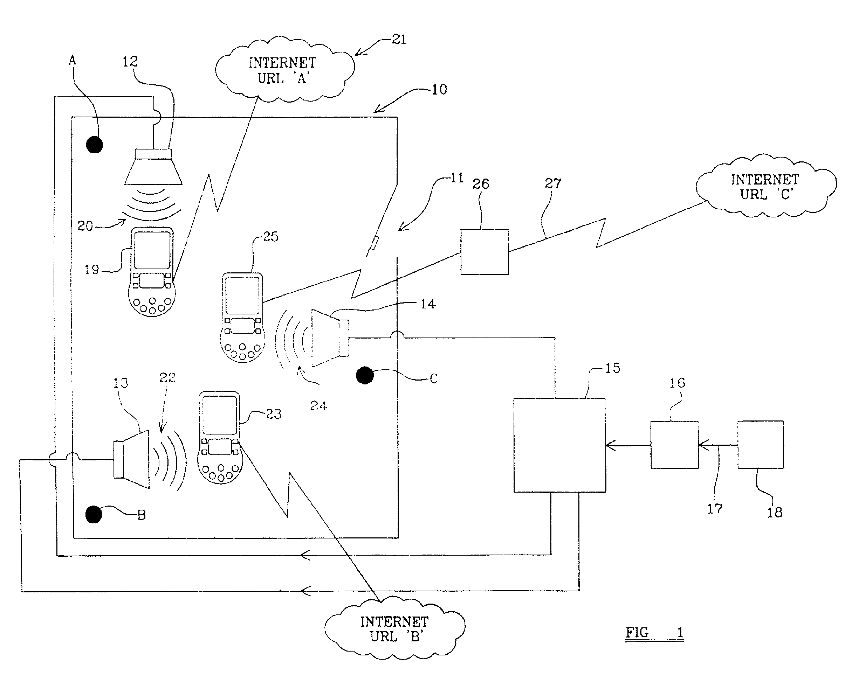

Referring first to Figure 1, this shows, in schematic form, a commercial or retail environment 10 having an entrance 11 through which users may pass, to browse a range of products and services illustrated generally at A, B and C. Positioned adjacent the wares A, B and C are loudspeakers 12, 13 and 14, each of which is connected to and forms part of an in-store intercom or piped music arrangement controlled from a control point 15. In generally conventional manner, the control point 15 passes audio signals to the speakers 12, 13 and 14 whereby piped music may be broadcast throughout the retail environment 10 and whereby announcements may be made, as and when appropriate.

Although, during "normal" use, the speakers 12, 13 and 14 may broadcast in-store music on a generally continuous basis, the present invention allows for additional sounds to be dispatched from the speakers on a somewhat localised basis. To this end, a sonic representation generator 16 is provided which, when in turn supplied with an appropriate URL instruction 17 from an instruction generator 18, is operative to generate a sonic representation of the URL and to pass this to the control point 15. The URL identifies a network location such as an internet site which is provided with detailed information concerning some of the wares A, B and C.

The sonic representation of the URL's (e.g. URL "A") is then blended with the (e.g. musical) output being fed to the loudspeaker 12 and thus transmitted, on a localised basis, towards persons in the vicinity of products A, and thus towards a communication device such as a PDA 19 that the person may be carrying.

The sonic representation generated by the generator 16 may be blended with the music stream using a modulation process such as frequency, amplitude or phase-shift modulation. Moreover, the volume and/or frequency of the sonic representation - and hence of the modulated carrier wave - may be such that the sonic representation is imperceptible to the user of the PDA 19, but nonetheless perceptible and intelligible to the PDA.

From this, it will be appreciated that the invention allows a sonic representation of a particular product or localised area to be conveyed to the PDA without the user thereof necessarily being aware of that fact.

The PDA, on receiving the sonically encoded representation 20, then effects, using appropriate embedded sound recognition software, a conversion of the sonic representation into a machine-readable format such as an alphanumeric string of the type by which URLs and other such Internet addresses are represented.

The PDA then uses embedded browser software to access the thus-decoded URL, shown at 21. As a result of this URL access, the customer is provided with detailed web-based information that is specific to the products A, and which may thus persuade the customer to make an appropriate purchase. It will be appreciated, of course, that the information featured on the site corresponding to URL "A" can be updated regularly, so that current price promotions and the like can be conveyed to an actual or prospective customer as and when that customer comes within the sonic range of the representation 20. In order to restrict the sonic range, the sonic representation may be transmitted at a relatively low volume, in comparison to the "carrier" music, although this need not be the case where the products A, B and C are provided in different rooms or sections of the retail environment 10.

In order to provide product-specific data relating to products "B", a different sonic representation 22 may be transmitted towards a PDA 23, using the loudspeaker 13. It will of course be appreciated that, should PDA 19 enter the sonic range of the speaker 13, then the PDA 19 may also be able to receive the sonic representation 22. As the products "B" differ from products "A", the URL instruction generated by the instruction generator 18 will differ from that used to give rise to the sonic representation 20, and it may be that a slightly different modulation step will be required in order to reduce the possibility of any interference arising within the control point 15.

Similar considerations apply to the transmission of a sonic representation 24 from a third speaker 14. However, in this case, the PDA 25 accesses the Internet site corresponding to URL "C" via an anonymising proxy 26 which disguises the origin of the page request 27 thus maintaining the privacy of the user of the PDA 25.

In the absence of such an anonymising proxy, it will be understood that the identity of the PDA concerned could be passed to the thus-accessed Internet site, revealing to the Internet site the identity of the browser-enabled PDA and hence the identity of the user/owner thereof.

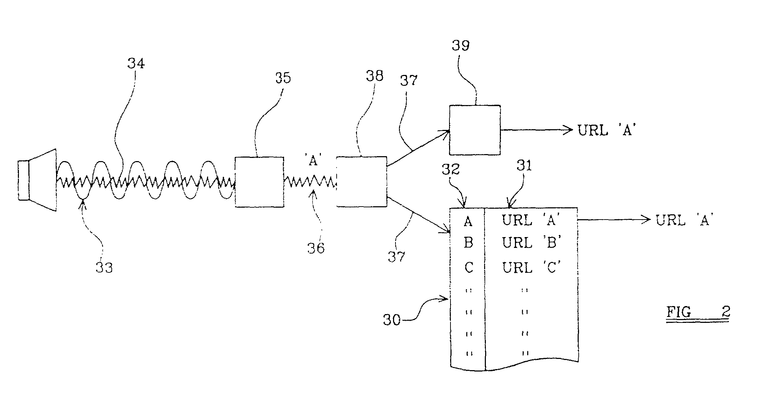

As indicated above, the PDAs, in order to be able to comprehend the sonic representations 20, 22 and 24, may make use of embedded sound recognition software which is able to convert the received sounds directly into a computer-readable URL format. However, sonically transmitting a quantity of information sufficient to enable such direct conversion to be effected may be difficult, and the invention also thus provides a "look-up" facility that enables the amount of sonic data transmitted to be kept to a minimum. This is described in relation to Figure 2.

To this end, the PDAs 19, 23 and 25 are each provided with a programmable look-up table 30 which contains a plurality (in this case at least three) of wares-specific URL addresses 31.

This table, which may be kept up to date by the action of a software agent provided within the PDA and which is able to access an appropriate Internet update site, is cross-referenced with a string of look-up variables 32 whereby receipt by the PDA of an encoded form of a particular look-up variable 32, allows the PDA to effect a cross-reference operation and thus to identify the appropriate URL to which the look-up variable corresponds.

It will be appreciated, from this, that this lessens the data transfer burden that is otherwise placed on the sound generation components and also on the PDAs' sound reception capability, thus increasing the efficiency of the process and reducing the tendency for failures to occur. Although not shown in the figures, the look-up table may use both rows and columns to cross-reference the appropriate URLs, in which case two sonic data elements would be required to identify the desired URL. Further, more than one look-up table 30 may be provided, whereby a third such sonic element would be required to identify the appropriate look-up table.

As will be understood by those well versed in the relevant art, a number of methods exist by which the URL data can be represented in sonic form. However, bearing in mind that, in a preferred embodiment, this invention is anticipated as being particularly well suited to use in a commercial or retail environment, modulation of an underlying musical carrier 33 with a URL data wave 34 is likely to be preferred. To effect this, a demodulator 35 is required, with the thus-demodulated sonic representation of the URL 36 then being converted into a machine-readable format 37 by an appropriate conversion element 38.

In the case where the PDA's are able to comprehend this information directly, a translator element 39 is used to give rise to an alphanumeric string corresponding to the URL. Alternatively, the look-up table approach may be used, as shown in Figure 2.

Although most contemporary PDA's are provided with Internet and web browsing capabilities, it may be, in some circumstances, that the actual or prospective customer will prefer to access the websites concerned by a means other than GSM. In such cases, the PDA concerned could be connected to a PC, with the appropriate URL being uploaded to the PC in generally conventional manner.

It will also be appreciated that the profile of the user of the PDA could be used to modify the information received or requested from the URL. Thus, a user could pre-program his/her PDA to access only certain sets of URL's, or only URL's relating to information in particular technical fields, for example.

Although the sonic representations of the URL's could conceivably be transmitted using ultrasound and infrasound, it is envisaged that encoded representations falling within a human-audible sound spectrum will be preferred, as such frequencies are likely to be best suited to existing intercom, piped music and broadcast arrangements as conventionally featured in retail and commercial establishments.

In addition, it will be understood that although the invention may be particularly well-suited to use in a retail and commercial establishment, as exemplified above, a multitude of other potential uses of the invention exist. Thus, the invention could be used in hospitals, military establishments, government departments and the like in order to provide information relating to the services or support that may be available in different areas. As will be appreciated, environments such as these may well be provided with localised intercom arrangements or broadcast music systems which, as explained above, provide, in one implementation of the invention, an important element of the physical framework that the invention makes use of, in practice. However, for the avoidance of any doubt, it should clearly be understood that such sonic "infrastructures" are not essential to the performance of the present invention, and that a number of other implementations are therefore envisaged.

In the present specification "comprise" means "includes or consists of" and "comprising" means "including or consisting of'.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of conveying network location information to a communication device, comprising procuring the network location information as a sonic representation thereof, and effecting wireless transmission of the sonic representation towards the communication device, the sonic representation, during transmission, being imperceptible or unintelligible to a user of the device.

2. A method according to Claim 1 wherein the sonic representation, whilst perceptible to the user, is encoded and thus unintelligible thereto.

3. A method according to Claim 2 wherein the sonic representation includes a carrier and wherein the communication device decodes the sonic representation using a demodulation step.

4. A method according to Claims 2 or Claim 3 wherein the network location information is encoded using a frequency, amplitude or phase-shift modulation step.

5. A method according to Claim 2, Claim 3 or Claim 4 wherein the communication device decodes the sonic representation by using the sonic representation as a look-up variable and accessing network location information in a data field corresponding to the look-up variable.

6. A method according to any one of the preceding claims wherein the network location information is a URL.

7. A method according to any one of the preceding claims wherein the communication device is a PDA.

8. A method according to any one of the preceding claims wherein the sonic representation is blended or transmitted with an audible stream.

9. A communication device having a receiving element operative to receive, in a form imperceptible or unintelligible to a user thereof, a sonic representation of network location information, and a conversion element operative to convert the sonic representation to a machine-readable format.

10. A communication device according to Claim 9 wherein the conversion element is associated with a demodulation element whereby network location information may be obtained from a modulated audible stream.
